# EUROPÄISCHE PATENTSCHRIFT

(11) **EP 3 260 286 B1**
(45) Veröffentlichungstag und Bekanntmachung des Hinweises auf die Patenterteilung: **07.09.2022**
(21) Anmeldenummer: 17170118.8
(22) Anmeldetag: 09.05.2017
(51) Int. Cl.: B30B 11/00, B30B 11/08, B30B 15/30

(54) **FÜLLEINRICHTUNG FÜR EINE RUNDLÄUFERPRESSE**
FILLING DEVICE FOR A ROTARY PRESS
DISPOSITIF DE REMPLISSAGE POUR UNE PRESSE ROTATIVE

(30) Priorität: 08.06.2016 DE 102016110556
(43) Veröffentlichungstag der Anmeldung: 27.12.2017
(73) Patentinhaber: Fette Compacting GmbH, 21493 Schwarzenbek (DE)
(72) Erfinder: Özcoban, Hüseyin, 22765 Hamburg (DE); Heinrich, Thomas, 21435 Stelle (DE); Ehrich, Thorsten, 22969 Witzhave (DE)
(74) Vertreter: Hauck Patentanwaltspartnerschaft mbB

(56) Entgegenhaltungen:
- EP-A2- 2 353 852
- CN-B- 104 228 126
- KR-A- 20010 037 750
- US-A- 1 686 804

## Beschreibung

Die Erfindung betrifft eine Fülleinrichtung zum Befüllen von Kavitäten einer Rundläuferpresse, umfassend ein Füllmaterialreservoir und eine mit dem Füllmaterialreservoir in Verbindung stehende Füllkammer mit einer Befüllöffnung, aus der Füllmaterial in die Kavitäten der Rundläuferpresse gelangen kann.

Die Kavitäten einer Rundläuferpresse werden mittels einer Fülleinrichtung mit der durch die Stempel der Rundläuferpresse zu verpressenden Pressmasse befüllt, dosiert und/oder vorverdichtet. Ober- und Unterstempel der Rundläuferpresse wirken in den Kavitäten zum Pressen von Presslingen zusammen. Die Qualität der hergestellten Presslinge hängt signifikant von der Qualität der Kavitätenbefüllung ab. Qualitätsmerkmale der hergestellten Presslinge sind beispielsweise Gewicht, Bruchfestigkeit, Dichteverteilung und Wirkstoffanteil. Eine reproduzierbare Qualität der Presslinge ist ein wichtiges Qualitätsmerkmal nach dem Arzneibuch und setzt eine reproduzierbare Qualität der Kavitätenbefüllung voraus. Als Qualität der Kavitätenbefüllung kann zum Beispiel die Schwankungsbreite der Füllmengen und/oder die Dichteverteilung der Pressmasse innerhalb einer einzelnen Kavität und/oder die Unversehrtheit der Pressmasse verstanden werden. Beispielsweise kann durch eine geringe Schwankungsbreite der Füllmengen ein gleichförmiges Gewicht aller hergestellten Presslinge gewährleistet werden.

Die Fülleinrichtungen müssen gewährleisten, dass die Qualität der Kavitätenbefüllung auch bei der hohen Leistung heutiger Rundläuferpressen gegeben ist. Bekannte Fülleinrichtungen basieren auf unterschiedlichen Konzepten, wie zum Beispiel Kammerfüllschuhen, Ein- oder Mehrkammer-Füllsystemen. Häufig werden in den Füllkammern der Fülleinrichtungen Rührflügelräder drehend angetrieben. Rührflügelräder werden insbesondere bei Hochleistungsrundläuferpressen eingesetzt. Dabei sind Rührflügelräder mit unterschiedlicher Anzahl und unterschiedlichen Formen von Rührflügeln bekannt. Durch die Rührflügel wird permanent Pressmasse zu den Kavitäten transportiert, so dass auch bei hohen Geschwindigkeiten der Rundläuferpresse die Verfügbarkeit ausreichender Pressmasse zur Befüllung der Kavitäten sichergestellt ist. Darüber hinaus lockern Rührflügel die Pressmasse auf, wodurch die Fließfähigkeit positiv beeinflusst wird. Hierdurch kann auch bei hoher Tablettierleistung eine gleichbleibende Qualität der Kavitätenbefüllung gewährleistet werden.

Die Auswirkung der Rührflügel der Rührflügelräder auf die Qualität der Kavitätenbefüllung ist unter anderem abhängig von der zu verpressenden Pressmasse. Die Rührflügel können signifikanten Einfluss auf die Transportmenge der Pressmasse und/oder auf das Maß der Verhinderung von Brückenbildung und/oder der Auflockerung haben. Außerdem können durch Auswahl geeigneter Rührflügel nachteilige Effekte, wie beispielsweise eine Entmischung oder Erwärmung der Pressmasse, verhindert werden. Es ist allerdings schwierig, eine Rührflügelkonfiguration zu finden, die alle unterschiedlichen Zielstellungen realisiert. Beispielsweise kann eine bestimmte Rührflügelkonfiguration einen guten Transport der Pressmasse zu den Kavitäten gewährleisten. Sie bietet dabei aber keine jederzeit zufriedenstellende Auflockerung der Pressmasse. Umgekehrt kann eine Rührflügelkonfiguration, die beispielsweise eine gute Auflockerung der Pressmasse gewährleistet, möglicherweise keinen zufriedenstellenden Transport der Pressmasse zu den Kavitäten gewährleisten. Insoweit besteht in der Praxis also ein Zielkonflikt.

Aus CN 104 228 126 A und KR 10/2001 0 037 750 A sind Fülleinrichtungen bekannt mit mehreren nebeneinander oder mit versetzten Drehachsen übereinander angeordneten Rührflügelrädern. Zumindest einige Rührflügelräder können sich hinsichtlich ihrer Geometrie unterscheiden.

Aus US 1,686,804 A ist eine Fülleinrichtung mit mehreren Rührflügeln bekannt, die entlang einer Längsachse versetzt an einer Spindel angeordnet sind. Die US 1,686,804 offenbart eine Fülleinrichtung nach dem Oberbegriff des Anspruchs 1 bzw. des Anspruchs 2.

Ausgehend von dem erläuterten Stand der Technik liegt der Erfindung daher die Aufgabe zugrunde, eine Fülleinrichtung der eingangs genannten Art bereitzustellen, die auch unterschiedliche Anforderungen hinsichtlich der Kavitätenbefüllung zufriedenstellend erfüllt.

Die Erfindung löst die Aufgabe durch die Gegenstände der unabhängigen Ansprüche 1 und 2.

Vorteilhafte Ausgestaltungen finden sich in den abhängigen Ansprüchen, der Beschreibung und den Figuren.

Für eine Fülleinrichtung der eingangs genannten Art löst die Erfindung die Aufgabe dadurch, dass in der Füllkammer ein erstes drehend angetriebenes Rührflügelrad mit Rührflügeln und ein zweites drehend angetriebenes Rührflügelrad mit Rührflügeln angeordnet sind, wobei sich erstes und zweites Rührflügelrad hinsichtlich ihrer Geometrie und/oder ihrer Drehrichtung und/oder ihrer Drehgeschwindigkeit unterscheiden.

Die erfindungsgemäße Fülleinrichtung ist zum Einsatz in einer Rundläuferpressen, insbesondere einer Rundläufer-Tablettenpresse vorgesehen. Bei der Rundläuferpresse kann es sich auch um einen Mehrfachrundläufer, insbesondere einen Doppelrundläufer, handeln. Es sind dann mehrere, insbesondere zwei Fülleinrichtungen, Pressstationen, Auswerferstationen etc. vorgesehen. Dies ist an sich bekannt. Der Rotor einer solchen Rundläuferpresse besitzt einen Drehantrieb, der den Rotor, insbesondere die Matrizenscheibe mit den Ober- und Unterstempeln, beispielsweise über eine Antriebswelle mit der Rotordrehzahl drehend antreibt. Die Matrizenscheibe kann einstückig ausgebildet sein oder aus Matrizensegmenten aufgebaut sein. Die Kavitäten können durch unmittelbar in die Matrizenscheibe eingebrachte Bohrungen oder durch in Aufnahmen der Matrizenscheibe eingesetzte lösbare Matrizen gebildet sein. In der Fülleinrichtung werden die Kavitäten der Matrizenscheibe mit einem beispielsweise pulverförmigen Füllmaterial befüllt. Anschließend wird das Füllmaterial in bekannter Weise durch die Ober- und Unterstempel der Rundläuferpresse in den Kavitäten zu einem Pressling, insbesondere einer Tablette, verpresst. Nach dem Ausstoßen der Presslinge aus denKavitäten, beispielsweise durch die Unterstempel der Rundläuferpresse, werden die Presslinge in einer Auswerferstation aus der Rundläuferpresse ausgeworfen. Die Auswerferstation kann beispielsweise einen unmittelbar oberhalb der Matrizenscheibe angeordneten Abstreifer umfassen, der die ausgestoßenen Presslinge von der unter dem Abstreifer hindurchdrehenden Matrizenscheibe in Richtung eines Ablaufkanals abstreift.

Die Fülleinrichtung umfasst ein Füllmaterialreservoir, das beispielsweise über einen Zuführabschnitt mit der Füllkammer verbunden sein kann. Aus dem Füllmaterialreservoir gelangt das Füllmaterial beispielsweise über den Zuführabschnitt insbesondere schwerkraftbedingt in die Füllkammer. Das Füllmaterialreservoir kann trichterförmig ausgestaltet sein. Die Füllkammer befindet sich im in der Rundläuferpresse montierten Zustand unmittelbar oberhalb der Matrizenscheibe, so dass im Betrieb Füllmaterial aus der Füllkammer durch die Befüllöffnung insbesondere schwerkraftbedingt in die Kavitäten der unter der Füllkammer hindurchdrehenden Matrizenscheibe fällt. Die Füllkammer kann ein sogenannter Füllschuh sein.

Erfindungsgemäß sind in der Füllkammer der Fülleinrichtung mindestens zwei drehend angetriebene Rührflügelräder angeordnet. Die Rührflügelräder besitzen jeweils Rührflügel. Die Fülleinrichtung besitzt einen oder mehrere Drehantriebe, der bzw. die die Rührflügelräder drehend antreiben. Die Rührflügel der Rührflügelräder sind über den Umfang des Rührflügelrads verteilt angeordnet und drehen in der mit dem Füllmaterial gefüllten Füllkammer. Das erste und zweite Rührflügelrad unterscheiden sich dabei hinsichtlich ihrer Geometrie und/oder ihrer Drehrichtung und/oder ihrer Drehgeschwindigkeit. Dabei kann sich insbesondere die Geometrie der Rührflügel von erstem und zweitem Rührflügelrad unterscheiden. Beispielsweise können die Rührflügel unterschiedliche Querschnitte besitzen. So können zum Beispiel die Rührflügel des einen Rührflügelrads dicker sein als die Rührflügel des anderen Rührflügelrads. Die Drehrichtung bzw. die Drehgeschwindigkeit und insbesondere die Geometrie der Rührflügel beeinflussen die Verfügbarkeit und Fließfähigkeit des Füllmaterials in unterschiedliche Maße. Die Auswahl der einzusetzenden Rührflügelkonfiguration hängt von der Beschaffenheit des zu verpressenden Füllmaterials ab. Durch das erfindungsgemäße Vorsehen mindestens zweier Rührflügelräder unterschiedlicher Konfiguration in einer Füllkammer können die Vorteile unterschiedlicher Rührflügelradkonfigurationen, insbesondere Rührflügelgeometrien miteinander kombiniert werden. So ist es möglich, den im Stand der Technik bei Einsatz nur eines Rührflügelrads in einer Füllkammer bestehenden Zielkonflikt aufzulösen. Auf diese Weise kann auch bei sehr hohen Geschwindigkeiten des Rotors der Rundläuferpresse und entsprechend sehr hohen Pressleistungen eine zuverlässig gleichbleibende Qualität der Kavitätenbefüllung und damit der Presslinge erreicht werden.

Das erste Rührflügelrad und das zweite Rührflügelrad sind in der Füllkammer übereinander angeordnet. Weiter sind bei der Variante der sich hinsichtlich ihrer Geometrie unterscheidenden Rührflügelräder das erste Rührflügelrad und das zweite Rührflügelrad über konzentrische Drehachsen drehend angetrieben. Hierbei wird eines der Rührflügelräder über eine Hohlachse drehend angetrieben, in der die Drehachse des anderen der Rührflügelräder unabhängig drehbar angeordnet ist.

Die Rührflügel eines von erstem und zweitem Rührflügelrad können aus einem Flachstab gebildet sein und die Rührflügel des anderen von erstem und zweitem Rührflügelrad können aus einem Rundstab gebildet sein. Bei einigen Füllmaterialien kann beispielsweise durch einen rechteckigen Querschnitt der Rührflügel zwar mehr Füllmaterial zu den Kavitäten transportiert werden, das Füllmaterial allerdings nicht immer ausreichend aufgelockert werden. Eine solche Auflockerung wird dagegen bei solchen Füllmaterialien durch einen runden Querschnitt der Rührflügel erreicht, der allerdings nicht immer einen ausreichenden Transport des Füllmaterials zu den Kavitäten gewährleistet. Durch die Kombination beispielsweise eines rechteckigen Querschnitts von Rührflügeln des einen Rührflügelrads mit einem runden Querschnitt der Rührflügel des anderen Rührflügelrads können ohne erhebliche Erhöhung der Drehzahl der Rührflügelräder jederzeit ein optimaler Füllmaterialtransport und Füllmaterialauflockerung und damit eine optimale Füllmaterialverfügbarkeit für die Kavitätenbefüllung gewährleistet werden. Eine erhöhte mechanische Belastung des Füllmaterials durch eine im Stand der Technik erforderliche starke Erhöhung der Rührflügelraddrehzahl wird so vermieden. Beispielsweise bei übereinander angeordneten Rührflügelrädern kann das Rührflügelrad mit den aus einem Rundstab gebildeten Rührflügeln in der Füllkammer oberhalb des Rührflügelrads mit den aus einem Flachstab gebildeten Rührflügeln angeordnet sein. Dadurch wird die oben erläuterte Kombination der Wirkungen der Rührflügel besonders vorteilhaft genutzt.

Nach einer weiteren Ausgestaltung können die Rührflügel von erstem und/oder zweitem Rührflügelrad jeweils in einer vorzugsweise horizontalen Ebene liegen. Sie liegen insbesondere im Querschnitt durch das Rührflügelrad in einer vorzugsweise horizontalen Ebene. Die Rührflügel eines Rührflügelrads können dabei jeweils auf gleicher Höhe an der Drehachse des Rührflügelrads angebunden sein und besitzen bei dieser Ausgestaltung über ihre Länge keine Richtungsänderungen, wie Krümmungen oder Kröpfungen, insbesondere in Richtung der Drehachse.

Es ist auch möglich, dass die Rührflügel von erstem und/oder zweitem Rührflügelrad nicht in einer vorzugsweise horizontalen Ebene liegen, insbesondere im Querschnitt durch das Rührflügelrad. Wiederum können die Rührflügel auf gleicher Höhe an der Drehachse des Rührflügelrads angebunden sein. Sie besitzen dann aber über ihre Länge eine oder mehrere Richtungsänderungen, wie zum Beispiel Krümmungen oder Kröpfungen etc., insbesondere in Richtung der Drehachse. Es ist dabei insbesondere auch eine Kombination der vorgenannten Ausgestaltungen möglich, also dass die Rührflügel eines von erstem und zweitem Rührflügelrad in einer solchen Ebene liegen und die Rührflügel des anderen von erstem und zweitem Rührflügelrad nicht in einer solchen Ebene liegen. Beispielsweise bei in der Füllkammer übereinander angeordneten Rührflügelrädern kann das Rührflügelrad, dessen Rührflügel nicht in einer Ebene liegen, oberhalb des Rührflügelrads angeordnet sein, dessen Rührflügel in einer Ebene liegen.

Nach einer weiteren Ausgestaltung kann vorgesehen sein, dass in der Füllkammer mindestens ein drittes drehend angetriebenes Rührflügelrad angeordnet ist, wobei sich das mindestens eine dritte Rührflügelrad von dem ersten und/oder zweiten Rührflügelrad hinsichtlich seiner Geometrie und/oder seiner Drehrichtung und/oder seiner Drehgeschwindigkeit unterscheidet. Es können hinsichtlich dieses Rührflügelrads die gleichen Ausgestaltungen vorliegen wie oben zu dem ersten und/oder zweiten Rührflügelrad erläutert.

Oberhalb oder seitlich der (ersten) Füllkammer kann mindestens eine weitere Füllkammer der Fülleinrichtung vorgesehen sein. In der mindestens einen weiteren Füllkammer kann mindestens ein weiteres drehend angetriebenes Rührflügelrad angeordnet sein.

Weiterhin kann eine Steuereinrichtung vorgesehen sein, die die Drehzahl und/oder die Drehrichtung des ersten und zweiten Rührflügelrads steuert. Es kann sich dabei beispielsweise um die Maschinensteuerung der Rundläuferpresse handeln. Natürlich kann die Steuereinrichtung auch gegebenenfalls weitere vorgesehene Rührflügelräder entsprechend steuern.

Die Erfindung betrifft außerdem eine Rundläuferpresse umfassend einen mittels eines Drehantriebs drehbaren Rotor, wobei der Rotor eine obere Stempelführung für obere Pressstempel der Rundläuferpresse und eine untere Stempelführung für untere Pressstempel der Rundläuferpresse sowie eine zwischen den Stempelführungen angeordnete Matrizenschreibe aufweist, wobei die Pressstempel mit Kavitäten der Matrizenscheibe zusammenwirken, weiter umfassend eine erfindungsgemäße Fülleinrichtung, durch die zu verpressendes Füllmaterial in die Kavitäten der Matrizenscheibe gefüllt wird, weiter umfassend mindestens eine obere Druckeinrichtung und mindestens eine untere Druckeinrichtung, die im Betrieb mit den oberen Pressstempeln und mit den unteren Pressstempeln zum Verpressen des Füllmaterials in den Kavitäten der Matrizenscheibe zusammenwirken, und umfassend eine Auswurfeinrichtung, in der in den Kavitäten erzeugte Presslinge aus der Rundläuferpresse ausgeworfen werden. Die Rundläuferpresse kann ausgestaltet sein wie grundsätzlich oben erläutert.

Ein Ausführungsbeispiel der Erfindung wird nachfolgend anhand von Figuren näher erläutert. Es zeigen schematisch:
- Fig. 1: eine erfindungsgemäße Rundläuferpresse in einer abgewickelten Darstellung des Rotors, und
- Fig. 2: eine vergrößerte Detailansicht der Rundläuferpresse aus Fig. 1 in einer Schnittansicht.

Soweit nichts anderes angegeben ist, bezeichnen in den Figuren gleiche Bezugszeichen gleiche Gegenstände.

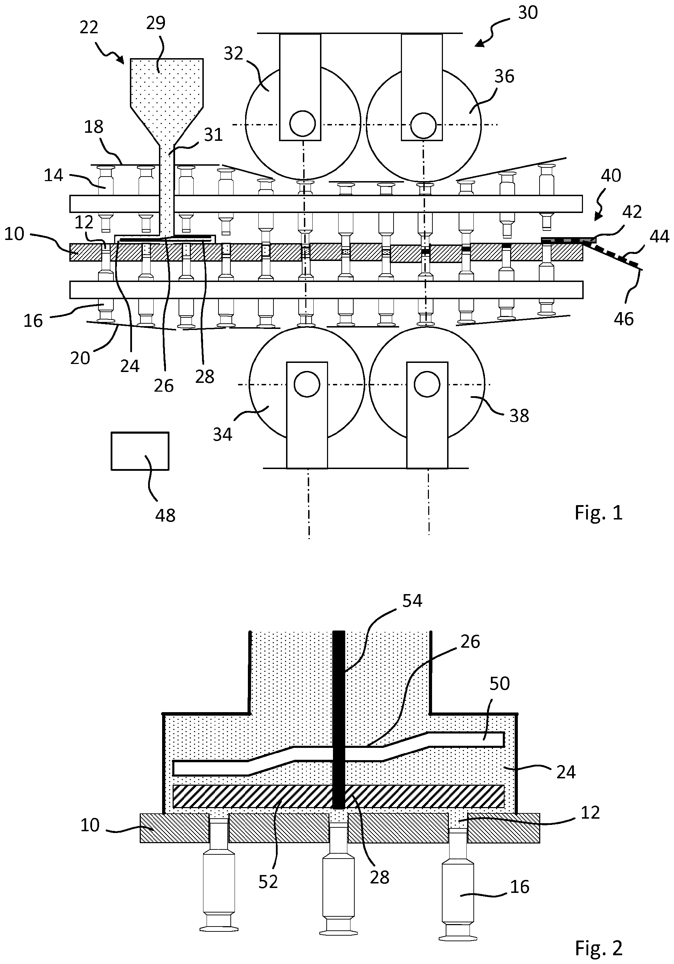

Die in den Figuren gezeigte Rundläuferpresse, insbesondere Rundläufer-Tablettenpresse, umfasst einen durch einen nicht näher dargestellten Drehantrieb drehend angetriebenen Rotor mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor eine Mehrzahl von Oberstempeln 14 und Unterstempeln 16, die mit der Matrizenscheibe 10 synchron umlaufen. Jeweils ein Paar aus Oberstempel 14 und Unterstempel 16 ist dabei einer Bohrung 12 zugeordnet. Die axiale Bewegung der Oberstempel 14 und Unterstempel 16 im Zuge der Drehung des Rotors wird durch obere Steuerkurvenelemente 18 und untere Steuerkurvenelemente 20 gesteuert. Die Rundläuferpresse umfasst weiterhin eine Fülleinrichtung 22, die eine Füllkammer 24 aufweist. In der Füllkammer 24 sind vorliegend ein erstes Rührflügelrad 26 und ein zweites Rührflügelrad 28 übereinander angeordnet. Die Rührflügelräder 26, 28 werden in dem gezeigten Beispiel von einem gemeinsamen Drehantrieb drehend angetrieben. Die Ausgestaltung der Rührflügelräder wird nachfolgend anhand von Figur 2 noch näher erläutert. Die Fülleinrichtung 22 umfasst darüber hinaus ein trichterförmiges Füllmaterialreservoir 29, das über einen Zuführabschnitt 31 mit der Füllkammer 24 in Verbindung steht. Auf diese Weise gelangt in dem vorliegenden Beispiel pulverförmiges Füllmaterial aus dem Füllmaterialreservoir 29 über den Zuführabschnitt 31 schwerkraftbedingt in die Füllkammer 24 und aus dieser über eine an der Unterseite der Füllkammer 24 vorgesehene Befüllöffnung wiederum schwerkraftbedingt in die Kavitäten 12 der Matrizenscheibe 10.

Außerdem umfasst die Rundläuferpresse eine Pressstation 30. Die Pressstation 30 besitzt eine Vorpresseinrichtung mit einer oberen Vordruckrolle 32 und einer unteren Vordruckrolle 34 sowie eine Hauptpresseinrichtung mit einer oberen Hauptdruckrolle 36 und einer unteren Hauptdruckrolle 38. Darüber hinaus umfasst die Rundläuferpresse eine Auswerferstation 40, vorliegend mit einem Abstreifer 42, der die in der Rundläuferpresse hergestellten Presslinge 44, insbesondere Tabletten, einem Presslingsablauf 46 zur weiteren Verarbeitung zuführt.

Eine Steuereinrichtung zum Betrieb der Rundläuferpresse ist bei dem Bezugszeichen 48 gezeigt. Die Steuereinrichtung 48 ist über nicht näher dargestellte Leitungen unter anderem mit dem Drehantrieb des Rotors und dem Drehantrieb der Rührflügelräder 26, 28 der Fülleinrichtung 22 verbunden.

In Fig. 2 ist zu erkennen, dass das erste Rührflügelrad 26 mehrere Rührflügel 50 aufweist, die auf gleicher Höhe an einer Drehachse 54 angebunden sind. Auch das Rührflügelrad 28 besitzt mehrere Rührflügel 52, die ebenfalls auf gleicher Höhe an der Drehachse 54 angebunden sind. Die Rührflügel 52 des zweiten Rührflügelrads 28 befinden sich in dem in Fig. 2 gezeigten Beispiel in einer horizontalen Ebene. Sie besitzen insbesondere keine Richtungsänderungen in Richtung der Drehachse 54. Dabei sind die Rührflügel 52 des zweiten Rührflügelrads 28 aus einem Flachstab gebildet. Die Rührflügel 50 des ersten Rührflügelrads 26 liegen dagegen nicht in einer horizontalen Ebene, sondern sind jeweils gekröpft. Darüber hinaus sind die Rührflügel 50 des ersten Rührflügelrads 26 aus einem Rundstab gebildet.

Im Betrieb der Rundläuferpresse wird der Rotor mit einer durch die Steuereinrichtung 48 eingestellten Rotordrehzahl drehend angetrieben. Gleichzeitig werden die Rührflügelräder 26, 28 mit einer durch die Steuereinrichtung 48 gesteuerten Drehzahl drehend angetrieben. Im Zuge der Drehung der Matrizenscheibe 10 laufen die Kavitäten 12 unter der Befüllöffnung der Füllkammer 24 hindurch. Über die Befüllöffnung wird das zu verpressende Füllmaterial wie erläutert in die Kavitäten 12 gefüllt. Die Füllhöhe wird durch die teilweise in die Kavitäten 12 eingefahrenen Unterstempel 16 vorgegeben. Im Bereich der Pressstation 30 erfolgt die Verpressung des in den Kavitäten 12 befindlichen Füllmaterials durch die Oberstempel 14 und Unterstempel 16, nämlich sukzessive durch die Vordruckrollen 32, 34 und die Hauptdruckrollen 36, 38. Nach dem Verpressen des Füllmaterials können die Oberstempel aus den Kavitäten 12 zurückgezogen und die hergestellten Presslinge 44 von den Unterstempeln 16 auf die Oberseite der Matrizenscheibe 10 ausgestoßen werden, so dass sie von dem Abstreifer 42 von der Oberseite der Matrizenscheibe 10 angestreift und den Presslingsablauf 46 zur weiteren Verarbeitung zugeführt werden.

Die bei dem in den Figuren gezeigten Ausführungsbeispiel gezeigte Kombination zweier unterschiedlich ausgestalteter Rührflügelräder 26, 28 gewährleistet eine optimale Auflockerung des Füllmaterials in der Füllkammer 24 einerseits und einen optimalen Transport des Füllmaterials in die Kavitäten 12 andererseits.

### Bezugszeichenliste

- 10: Matrizenscheibe
- 12: Kavitäten
- 14: Oberstempel
- 16: Unterstempel
- 18: Obere Steuerkurvenelemente
- 20: Untere Steuerkurvenelemente
- 22: Fülleinrichtung
- 24: Füllkammer
- 26: Erstes Rührflügelrad
- 28: Zweites Rührflügelrad
- 29: Füllmaterialreservoir
- 30: Pressstation
- 31: Zuführabschnitt
- 32: Obere Vordruckrolle
- 34: Untere Vordruckrolle
- 36: Obere Hauptdruckrolle
- 38: Untere Hauptdruckrolle
- 40: Auswerferstation
- 42: Abstreifer
- 44: Presslinge
- 46: Presslingsablauf
- 48: Steuereinrichtung
- 50: Rührflügel
- 52: Rührflügel
- 54: Drehachse

## Patentansprüche

1. Fülleinrichtung zum Befüllen von Kavitäten (12) einer Rundläuferpresse, umfassend ein Füllmaterialreservoir (29) und eine mit dem Füllmaterialreservoir (29) in Verbindung stehende Füllkammer (24) mit einer Befüllöffnung, aus der Füllmaterial in die Kavitäten (12) der Rundläuferpresse gelangen kann, wobei in der Füllkammer (24) ein erstes drehend angetriebenes Rührflügelrad (26) mit Rührflügeln (50) und ein zweites drehend angetriebenes Rührflügelrad (28) mit Rührflügeln (52) übereinander angeordnet sind, **dadurch gekennzeichnet, dass** das erste Rührflügelrad (26) und das zweite Rührflügelrad (28) über konzentrische Drehachsen drehend angetrieben sind, wobei sich erstes und zweites Rührflügelrad (26, 28) hinsichtlich ihrer Drehrichtung und/oder ihrer Drehgeschwindigkeit unterscheiden.

2. Fülleinrichtung zum Befüllen von Kavitäten (12) einer Rundläuferpresse, umfassend ein Füllmaterialreservoir (29) und eine mit dem Füllmaterialreservoir (29) in Verbindung stehende Füllkammer (24) mit einer Befüllöffnung, aus der Füllmaterial in die Kavitäten (12) der Rundläuferpresse gelangen kann, **dadurch gekennzeichnet, dass** in der Füllkammer (24) ein erstes drehend angetriebenes Rührflügelrad (26) mit Rührflügeln (50) und ein zweites drehend angetriebenes Rührflügelrad (28) mit Rührflügeln (52) übereinander angeordnet sind, und wobei sich erstes und zweites Rührflügelrad (26, 28) hinsichtlich ihrer Geometrie unterscheiden, **dadurch gekennzeichnet, dass** das erste Rührflügelrad (26) und das zweite Rührflügelrad (28) über konzentrische Drehachsen drehend angetrieben sind, wobei eines der Rührflügelräder über eine Hohlachse drehend angetrieben wird, in der die Drehachse des anderen der Rührflügelräder unabhängig drehbar angeordnet ist.

3. Fülleinrichtung nach Anspruch 1 oder 2, **dadurch gekennzeichnet, dass** die Rührflügel (50, 52) eines von erstem und zweitem Rührflügelrad (26, 28) aus .../2 einem Flachstab gebildet sind und die Rührflügel (50, 52) des anderen von erstem und zweitem Rührflügelrad (26, 28) aus einem Rundstab gebildet sind.

4. Fülleinrichtung nach Anspruch 3, **dadurch gekennzeichnet, dass** das Rührflügelrad (26, 28) mit den aus einem Rundstab gebildeten Rührflügeln (50, 52) in der Füllkammer (24) oberhalb des Rührflügelrads (26, 28) mit den aus einem Flachstab gebildeten Rührflügeln (50, 52) angeordnet ist.

5. Fülleinrichtung nach einem der vorhergehenden Ansprüche, **dadurch gekennzeichnet, dass** die Rührflügel (50, 52) von erstem und/oder zweitem Rührflügelrad (26, 28) jeweils in einer Ebene liegen.

6. Fülleinrichtung nach einem der vorhergehenden Ansprüche, **dadurch gekennzeichnet, dass** die Rührflügel (50, 52) von erstem und/oder zweitem Rührflügelrad (26, 28) nicht in einer Ebene liegen.

7. Fülleinrichtung nach einem der vorhergehenden Ansprüche, **dadurch gekennzeichnet, dass** die Rührflügel (50, 52) von erstem und/oder zweitem Rührflügelrad (26, 28) eine oder mehrere Kröpfungen aufweisen.

8. Fülleinrichtung nach Anspruch 1, **dadurch gekennzeichnet, dass** eines der Rührflügelräder über eine Hohlachse drehend angetrieben wird, in der die Drehachse des anderen der Rührflügelräder unabhängig drehbar angeordnet ist.

9. Fülleinrichtung nach einem der vorhergehenden Ansprüche, **dadurch gekennzeichnet, dass** in der Füllkammer (24) mindestens ein drittes drehend angetriebenes Rührflügelrad angeordnet ist, wobei sich das mindestens eine dritte Rührflügelrad von dem ersten und/oder zweiten Rührflügelrad (26, 28) hinsichtlich seiner Geometrie und/oder seiner Drehrichtung und/oder seiner Drehgeschwindigkeit unterscheidet.

10. Fülleinrichtung nach einem der vorhergehenden Ansprüche, **dadurch gekennzeichnet, dass** oberhalb oder seitlich der Füllkammer (24) mindestens eine weitere Füllkammer vorgesehen ist.

11. Fülleinrichtung nach Anspruch 10, **dadurch gekennzeichnet, dass** in der mindestens einen weiteren Füllkammer mindestens ein weiteres drehend angetriebenes Rührflügelrad angeordnet ist.

12. Fülleinrichtung nach einem der vorhergehenden Ansprüche, **dadurch gekennzeichnet, dass** eine Steuereinrichtung (48) vorgesehen ist, die die Drehzahl und/oder die Drehrichtung des ersten und zweiten Rührflügelrads (26, 28) steuert.

13. Rundläuferpresse umfassend einen mittels eines Drehantriebs drehbaren Rotor, wobei der Rotor eine obere Stempelführung für obere Pressstempel der Rundläuferpresse und eine untere Stempelführung für untere Pressstempel der Rundläuferpresse sowie eine zwischen den Stempelführungen angeordnete Matrizenschreibe aufweist, wobei die Pressstempel mit Kavitäten (12) der Matrizenscheibe (10) zusammenwirken, weiter umfassend eine Fülleinrichtung (22) nach einem der vorhergehenden Ansprüche, durch die zu verpressendes Füllmaterial in die Kavitäten (12) der Matrizenscheibe (10) gefüllt wird, weiter umfassend mindestens eine obere Druckeinrichtung und mindestens eine untere Druckeinrichtung, die im Betrieb mit den oberen Pressstempeln und mit den unteren Pressstempeln zum Verpressen des Füllmaterials in den Kavitäten (12) der Matrizenscheibe (10) zusammenwirken, und umfassend eine Auswurfeinrichtung, in der in den Kavitäten (12) erzeugte Presslinge aus der Rundläuferpresse ausgeworfen werden.

## Claims

1. A filling apparatus for filling cavities (12) of a rotary press, comprising a filling material reservoir (29) and a filling chamber (24), which is connected to the filling material reservoir (29), with a filling opening, from which filling material can enter the cavities (12) of the rotary press, wherein a first rotationally driven stirrer blade wheel (26) with stirrer blades (50) and a second rotationally driven stirrer blade wheel (28) with stirrer blades (52) are arranged one above the other in the filling chamber (24), **characterized in that** the first stirrer blade wheel (26) and the second stirrer blade wheel (28) are rotationally driven by concentric rotary shafts, wherein the first and second stirrer blade wheels (26, 28) differ with regard to their direction of rotation and/or their rotational speed.

2. A filling apparatus for filling cavities (12) of a rotary press, comprising a filling material reservoir (29) and a filling chamber (24), which is connected to the filling material reservoir (29), with a filling opening, from which filling material can enter the cavities (12) of the rotary press, **characterized in that** a first rotationally driven stirrer blade wheel (26) with stirrer blades (50) and a second rotationally driven stirrer blade wheel (28) with stirrer blades (52) are arranged one above the other in the filling chamber (24), and wherein the first and second stirrer blade wheels (26, 28) differ with regard to their geometry, **characterized in that** the first stirrer blade wheel (26) and the second stirrer blade wheel (28) are rotationally driven by concentric rotary shafts, wherein one of the stirrer blade wheels is rotationally driven by a hollow shaft in which the rotary shaft of the other of the stirrer blade wheels is independently rotatably arranged.

3. The filling apparatus according to claim 1 or 2, **characterized in that** the stirrer blades (50, 52) of one of the first and second stirrer blade wheels (26, 28) is formed from a flat bar, and the stirrer blades (50, 52) of the other of the first and second stirrer blade wheels (26, 28) is formed from a round bar.

4. The filling apparatus according to claim 3, **characterized in that** the stirrer blade wheel (26, 28) with the stirrer blades (50, 52) formed from a round bar is arranged in the filling chamber (24) above the stirrer blade wheel (26, 28) with the stirrer blades (50, 52) formed from a flat bar.

5. The filling apparatus according to one of the preceding claims, **characterized in that** the stirrer blades (50, 52) of the first and/or second stirrer blade wheel (26, 28) each lie in one plane.

6. The filling apparatus according to one of the preceding claims, **characterized in that** the stirrer blades (50, 52) of the first and/or second stirrer blade wheel (26, 28) do not lie in one plane.

7. The filling apparatus according to one of the preceding claims, **characterized in that** the stirrer blades (50, 52) of the first and/or second stirrer blade wheel (26, 28) have one or more offsets.

8. The filling apparatus according to claim 1, **characterized in that** one of the stirrer blade wheels is rotationally driven by a hollow shaft in which the rotary shaft of the other of the stirrer blade wheels is independently rotationally arranged.

9. The filling apparatus according to one of the preceding claims, **characterized in that** at least one third rotationally driven stirrer blade wheel is arranged in the filling chamber (24), wherein the at least one third stirrer blade wheel differs from the first and/or second stirrer blade wheel (26, 28) with regard to its geometry and/or its direction of rotation and/or its rotational speed.

10. The filling apparatus according to one of the preceding claims, **characterized in that** at least one further filling chamber is provided above or to the side of the filling chamber (24).

11. The filling apparatus according to claim 10, **characterized in that** at least one further rotationally driven stirrer blade wheel is arranged in the at least one further filling chamber.

12. The filling apparatus according to one of the preceding claims, **characterized in that** a control apparatus (48) is provided, which controls the rotational speed and/or the direction of rotation of the first and second stirrer blade wheels (26, 28).

13. A rotary press comprising a rotor rotatable by means of a rotary drive, wherein the rotor has an upper punch guide for upper press punches of the rotary press and a lower punch guide for lower press punches of the rotary press, as well as a die plate arranged between the punch guides, wherein the press punches interact with cavities (12) of the die plate (10), further comprising a filling apparatus (22) according to one of the preceding claims, by which material to be pressed is filled into the cavities (12) of the die plate (10), further comprising at least one upper pressing apparatus and at least one lower pressing apparatus, which interact during operation with the upper press punches and with the lower press punches to press the filling material in the cavities (12) of the die plate (10), and comprising an ejection apparatus, in which pellets generated in the cavities (12) are ejected from the rotary press.

## Revendications

1. Dispositif de remplissage pour le remplissage de cavités (12) d'une presse rotative, comportant un réservoir de matériau de remplissage (29) et une chambre de remplissage (24) reliée au réservoir de matériau de remplissage (29) avec une ouverture de remplissage, à partir de laquelle du matériau de remplissage peut parvenir dans les cavités (12) de la presse rotative, dans lequel une première roue à palettes agitatrices (26) entraînée de façon rotative avec des palettes agitatrices (50) et une deuxième roue à palettes agitatrices (28) entraînée de façon rotative avec des palettes agitatrices (52) sont disposées l'une au-dessus de l'autre dans la chambre de remplissage (24), **caractérisé en ce que** la première roue à palettes agitatrices (26) et la deuxième roue à palettes agitatrices (28) sont entraînées en rotation par des axes de rotation concentriques, dans lequel la première et la deuxième roue à palettes agitatrices (26, 28) se distinguent quant à leur sens de rotation et/ou à leur vitesse de rotation.

2. Dispositif de remplissage pour le remplissage de cavités (12) d'une presse rotative, comportant un réservoir de matériau de remplissage (29) et une chambre de remplissage (24) reliée au réservoir de matériau de remplissage (29) avec une ouverture de remplissage, à partir de laquelle du matériau de remplissage peut parvenir dans les cavités (12) de la presse rotative, **caractérisé en ce qu'**une première roue à palettes agitatrices (26) entraînée de façon rotative avec des palettes agitatrices (50) et une deuxième roue à palettes agitatrices (28) entraînée de façon rotative avec des palettes agitatrices (52) sont disposées l'une au-dessus de l'autre dans la chambre de remplissage (24), et dans lequel la première et la deuxième roue à palettes agitatrices (26, 28) se distinguent quant à leur géométrie, **caractérisé en ce que** la première roue à palettes agitatrices (26) et la deuxième roue à palettes agitatrices (28) sont entraînées en rotation par des axes de rotation concentriques, l'une des roues à palettes agitatrices étant entraînée en rotation par un axe creux, dans lequel l'axe de rotation de l'autre des roues à palettes agitatrices est disposé de manière à pouvoir tourner de façon indépendante.

3. Dispositif de remplissage selon la revendication 1 ou 2, **caractérisé en ce que** les palettes agitatrices (50, 52) de l'une parmi la première et la deuxième roue à palettes agitatrices (26, 28) sont constituées d'une baguette plate et les palettes agitatrices (50, 52) de l'autre parmi la première et la deuxième roue à palettes agitatrices (26, 28) sont constituées de baguettes rondes.

4. Dispositif de remplissage selon la revendication 3, **caractérisé en ce que** dans la chambre de remplissage (24), la roue à palettes agitatrices (26, 28) dotée des palettes agitatrices (50, 52) constituées d'une baguette ronde est disposée au-dessus de la roue à palettes agitatrices (26, 28) dotée des palettes agitatrices (50, 52) constituées d'une baguette plate.

5. Dispositif de remplissage selon l'une des revendications précédentes, **caractérisé en ce que** les palettes agitatrices (50, 52) de la première et/ou de la deuxième roue à palettes agitatrices (26, 28) se trouvent respectivement dans un plan.

6. Dispositif de remplissage selon l'une des revendications précédentes, **caractérisé en ce que** les palettes agitatrices (50, 52) de la première et/ou de la deuxième roue à palettes agitatrices (26, 28) ne se trouvent pas dans un plan.

7. Dispositif de remplissage selon l'une des revendications précédentes, **caractérisé en ce que** les palettes agitatrices (50, 52) de la première et/ou de la deuxième roue à palettes agitatrices (26, 28) présentent un ou plusieurs coudes.

8. Dispositif de remplissage selon la revendication 1, **caractérisé en ce que** l'une des roues à palettes agitatrices est entraînée en rotation par un axe creux, dans lequel l'axe de rotation de l'autre des roues à palettes agitatrices est disposé de manière à pouvoir tourner de façon indépendante.

9. Dispositif de remplissage selon l'une des revendications précédentes, **caractérisé en ce qu'**au moins une troisième roue à palettes agitatrices entraînée en rotation est disposée dans la chambre de remplissage (24), dans lequel l'au moins une troisième roue à palettes agitatrices se distingue de la première et/ou de la deuxième roue à palettes agitatrices (26, 28) quant à sa géométrie et/ou son sens de rotation et/ou sa vitesse de rotation.

10. Dispositif de remplissage selon l'une des revendications précédentes, **caractérisé en ce qu'**au moins une chambre de remplissage supplémentaire est prévue au-dessus ou à côté de la chambre de remplissage (24).

11. Dispositif de remplissage selon la revendication 10, **caractérisé en ce qu'**au moins une roue à palettes agitatrices supplémentaire entraînée en rotation est disposée dans l'au moins une chambre de remplissage supplémentaire.

12. Dispositif de remplissage selon l'une des revendications précédentes, **caractérisé en ce qu'**il est prévu un dispositif de commande (48) commandant le nombre de tours et/ou le sens de rotation de la première et de la deuxième roue à palettes agitatrices (26, 28).

13. Presse rotative comportant un rotor mis en rotation au moyen d'un entraînement rotatif, dans laquelle le rotor présente un guide de poinçons supérieur pour des poinçons supérieurs de la presse rotative et un guide de poinçons inférieur pour des poinçons inférieurs de la presse rotative, ainsi qu'un disque à matrice disposé entre les guides de poinçons, dans laquelle les poinçons coopèrent avec des cavités (12) du disque à matrice (10), comportant en outre un dispositif de remplissage (22) selon l'une des revendications précédentes, par le biais duquel du matériau de remplissage à comprimer est introduit dans les cavités (12) du disque à matrice (10), comportant en outre au moins un dispositif de pression supérieur et au moins un dispositif de pression inférieur, lesquels coopèrent avec les poinçons supérieurs et avec les poinçons inférieurs pendant le fonctionnement pour la compression du matériau de remplissage dans les cavités (12) du disque à matrice (10), et comportant un dispositif d'éjection, dans lequel des comprimés fabriqués dans les cavités (12) sont éjectés hors de la presse rotative.
